# EUROPEAN PATENT APPLICATION

(11) **EP 4 510 344 A1**
(43) Date of publication of application: **19.02.2025**
(21) Application number: 22938244.5
(22) Date of filing: 27.10.2022
(51) Int. Cl.: H01M 50/30

(54) **POWER BATTERY AND ELECTRIC VEHICLE**

(30) Priority: 20.04.2022 CN 202220924574 U
(71) Applicant: Eve Power Co., Ltd., Jingmen, Hubei 448000 (CN)
(72) Inventor: OUYANG, Xiaoqun, Jingmen, Hubei 448000 (CN)
(74) Representative: Grünecker Patent- und Rechtsanwälte PartG mbB
(86) International application number: PCT/CN2022/127932
(87) International publication number: WO 2023/202024

(57) **Abstract**

A power battery and an electric vehicle are provided, which relate to the technical field of electric vehicles. The power battery includes a box body and a tray. A mounting cavity is provided in the box body. The tray is used is used for installing cells, the tray is arranged in the mounting cavity, a bottom surface of the tray and the mounting cavity enclose to form a pressure relief cavity, and the tray is provided with a through hole in communication with the pressure relief cavity. An inlet in communication with the pressure relief cavity is provided in an inner side of at least one side wall of side walls of the box body which encloses to form the mounting cavity, an outlet in communication with the external environment of the box body is provided in an outer side of at least one side wall of the box body which encloses to form the mounting cavity, and the inlet is in communication with the outlet. Gas in the pressure relief cavity can be directly discharged out of the box body through the inlet and outlet in the side wall of the box body, so that the discharging path is shortened, and the gas generated due to thermal runaway of the cell is promptly discharged out of the box body, a sharp increase in pressure and temperature in the pressure relief cavity and thermal runaway of other cells cause thereby are avoided, which facilitates improvement of the safety performance of the power battery.

## Description

This application claims the priority of a Chinese Patent Application filed with the National Intellectual Property Administration (CNIPA) on April 20, 2022, with application No. 202220924574.8, and all disclosure of which is incorporated herein by reference in its entirety.

### TECHNICAL FIELD

The present application relates to the field of electric vehicle technology, for example, to a power battery and an electric vehicle.

### BACKGROUND

In recent years, new energy vehicles have made great progress, especially new energy vehicles powered by lithium batteries. Cylindrical cells in lithium batteries are widely used in power systems. Due to their small single cell capacity, the number of batteries in single-string batteries is large.

In a cylindrical power battery, multiple cells are carried by a tray and placed in a box body, and a pressure relief cavity is formed between the tray and the box body. When a cell is thermally runaway, the explosion-proof valve of the cell is opened, and the gas and ejecta generated inside the cell enter the pressure relief cavity and are discharged. Since the venting channel of the gas in the pressure relief cavity of the power battery is long, thus the gas cannot be discharged in time, resulting in a rapid increase in the gas pressure and temperature in the pressure relief cavity, which is apt to trigger thermal runaway of other cells.

### SUMMARY

A power battery and an electric vehicle are provided according to the present application, which can solve the problem that the gas in the pressure relief cavity cannot be discharged in time which may trigger thermal runaway of other cells.

In a first aspect, a power battery is provided according to an embodiment of the present application, which includes: a box body and a tray.

An mounting cavity is disposed in the box body.

The tray is used for installing cells, the tray is disposed in the mounting cavity, a bottom surface of the tray and the mounting cavity enclose to form a pressure relief cavity, and the tray is provided with a through hole in communication with the pressure relief cavity.

The mounting cavity is enclosed with side walls of the box body. An inner side of at least one side wall of the side walls of the box body is provided with an inlet in communication with the pressure relief cavity. An outer side of the at least one side wall of the side walls of the box body is provided with an outlet in communication with external environment of the box body, and the inlet is in communication with the outlet.

In one embodiment, the inlet and the outlet on the same side wall are arranged opposite to each other.

In one embodiment, a venting channel is disposed in a side wall of the box body provided with the inlet and extends in a length direction of the side wall, two ends of the venting channel are closed, and the inlet is in communication with the outlet via the venting channel.

In one embodiment, the inlet is an elongated hole extending in a length direction of the venting channel.

In one embodiment, the box body includes: a bottom plate; and multiple side plates.

The multiple side plates are arranged around a circumferential direction of the bottom plate and connected to the bottom plate. At least one of the multiple side plates is provided with the inlet and the outlet.

In one embodiment, each of two side plates arranged on left and right is provided with the inlet and the outlet.

In one embodiment, multiple mounting cavities are disposed in the box body. Each of the mounting cavities is provided with the tray and the pressure relief cavity, and each of the pressure relief cavities is in communication with a respective inlet.

In one embodiment, the box body further includes: multiple support beams.

The multiple support beams are cross-arranged on the bottom plate, and the multiple support beams, together with the multiple side plates, enclose to form multiple mounting cavities, where at least one of the side plates which are used for enclosing to form a same mounting cavity is provided with the inlet and the outlet.

In one embodiment, the multiple support beams include: a longitudinal beam, a first cross beam and a second cross beam.

The longitudinal beam extends in a front-rear direction, and a rear end of the longitudinal beam is connected to a side plate at a rear side;
The first cross beam extends in a left-right direction, each of two ends of the first cross beam is connected to a respective side plate, and the first cross beam and the longitudinal beam are arranged in a cross pattern; and
The second cross beam extends in the left-right direction, each of two ends of the second cross beam is connected to a respective side plate, and a middle part of the second cross beam is connected to a front end of the longitudinal beam.

In one embodiment, at least part of the longitudinal beam is configured to be spaced apart from the bottom plate, and at least part of the first cross beam is configured to be spaced apart from the bottom plate.

In one embodiment, a venting valve is configured at the outlet, and the venting valve is configured to be opened when air pressure reaches a preset value.

In the second aspect, an electric vehicle is provided according to embodiments of the present application, which includes the power battery described above.

Beneficial effects of the present application are as follows.

In the power battery according to the present application, the gas in the pressure relief cavity can be directly discharged out of the box body through the inlet and outlet in the side wall of the box body, which can shorten the gas discharging path of the gas generated after the thermal runaway of the cell, and timely discharge the gas generated due to the thermal runaway of the cell out of the box body, so as to avoid the rapid increase of pressure and temperature in the pressure relief cavity and thermal runaway of other batteries caused thereby, which is conducive to improving the safety performance of the power battery.

The electric vehicle according to the present application has good safety performance.

### BRIEF DESCRIPTION OF DRAWINGS

FIG. 1 is a schematic structural diagram of a power battery according to an embodiment of the present application;
FIG. 2 is a schematic structural diagram of a box body and a tray in an assembled state according to an embodiment of the present application;
FIG. 3 is a top view of the box body according to an embodiment of the present application;
FIG. 4 is a cross-sectional view of the box body according to an embodiment of the present application; and
FIG. 5 is a schematic diagram of a gas discharging path according to an embodiment of the present application.

Reference numerals in the drawings:
1 box body
10 mounting cavity
11 bottom plate
111 convex bump
12 left side plate
13 right side plate
131 inlet
132 second top surface
133 first top surface
14 rear side plate
15 front side plate
16 longitudinal beam
17 first cross beam
18 second cross beam
2 tray
21 through hole
3 cell
20 pressure relief cavity

### DETAILED DESCRIPTION

In the description of this application, it is to be noted that, unless otherwise expressly specified and limited, the terms "connected to each other", "connected" or "fixed" are to be construed in a broad sense, for example, as permanently connected or detachably connected or integrally formed; mechanically connected or electrically connected; directly connected to each other or indirectly connected to each other via an intermediary; or internally connection of two components or interaction relationship between two components. For those of ordinary skill in the art, specific meanings of the preceding terms in the present application may be construed based on specific situations.

In the present application, unless otherwise expressly specified and limited, when a first feature is described as "above" or "below" a second feature, the first feature and the second feature may be in direct contact, or be in contact via another feature between the two features. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of this article, it should be understood that the orientation or position relationships indicated by the terms such as "upper", "lower", "left", "right", etc., are based on the orientation or position relationship shown in the drawings, which is only for the convenience of description and simplification of operation, and does not indicate or imply that the device or element referred to must have a specific orientation, be constructed and operated in a specific orientation, and therefore cannot be understood as a limitation of the present application. Furthermore, the terms "first" and "second" are only used to distinguish in the description and have no special meaning.

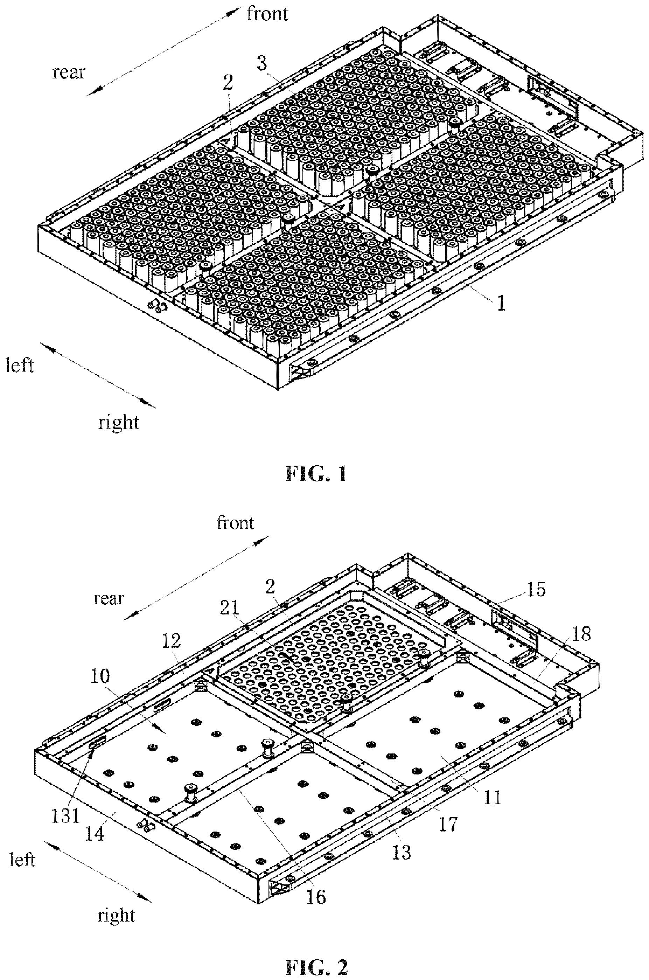

An electric vehicle is provided according to this embodiment, which includes a power battery. As shown in FIG. 1 and FIG. 2, the power battery includes a box body 1 and a battery module. A mounting cavity 10 is provided in the box body 1, and the battery module is installed in the mounting cavity 10. The battery module includes a tray 2 and multiple cells 3 arranged on the tray 2. The multiple cells 3 are fixed by the tray 2 to form a modular structure, which is convenient for the disassembly and assembly of the battery module. The tray 2 is provided with a through hole 21 facing one end of the cell 3. A bottom surface of the tray 2 and the mounting cavity 10 enclosure to form a pressure relief cavity 20, and the pressure relief cavity 20 is in communication with the through hole 21. For example, the through hole 21 in the tray 2 is facing an explosion-proof valve provided on the cell 3. When the cell 3 is thermally runaway, the explosion-proof valve at one end of the cell 3 opens, and the gas and ejecta generated in the cell 3 can enter the pressure relief cavity 20 through the through hole 21, and be discharged from the pressure relief cavity 20 to the outside of the box body 1 to prevent the cell 3 from burning or exploding. In addition, with the above arrangement, the area of the pressure relief cavity 20 is larger than the area of the through hole 21, and the gas released from the cell 3 is quickly discharged into the pressure relief cavity 20 through the through hole 21, and then discharged out from the pressure relief cavity 20 after the pressure is reduced, which is beneficial to improving the safety performance of the battery module.

Since the temperature of the gas generated after the thermal runaway of the cell 3 is high, when the gas discharged from the thermal runaway of the cell 3 enters the pressure relief cavity 20, the pressure and temperature in the pressure relief cavity 20 will increase sharply, and if it is not discharged in time, it is apt to cause thermal runaway of other cells 3.

In order to cope with the above situation, an inlet 131 in communication with the pressure relief cavity 20 is provided in an inner side of at least one side wall of side walls of the box body 1. The mounting cavity 10 is enclosed with the side walls of the box body 1. An outlet in communication with the external environment of the box body 1 is provided in an outer side of the at least one side wall of the box body 1, and the inlet 131 is in communication with the outlet. When the cell 3 is in thermal runaway, the gas in the pressure relief cavity 20 passes through the side wall of that side from the inlet 131 and then flows out from the outlet. The gas discharging path section can timely discharge the gas in the pressure relief cavity 20 to avoid the increase of pressure and temperature in the pressure relief cavity 20 and thermal runaway of other cells 3 resulted from it, thereby improving the safety of use.

In one embodiment, the inlet 131 and the outlet on the same side wall are arranged opposite to each other, so that the gas passing through the inlet 131 can be directly discharged from the outlet, improving the discharging efficiency to avoid adversely affecting other cells 3.

In this embodiment, the side wall of one side of the mounting cavity 10 is provided with the inlet 131 and the outlet, two inlets 131 are provided so that the gas in the pressure relief cavity 20 can pass through the inlet 131 nearby, which facilitates discharging of the gas in the pressure relief cavity 20 as soon as possible.

In other embodiments, three or more inlets 131 can be provided; the side walls of both sides or more of the mounting cavity 10 are each provided with the inlets 131 and outlets to discharge gas to the outside of the box body 1 faster.

In order to make the gas in the pressure relief cavity 20 be discharged from the pressure relief cavity 20 faster, the side wall of the box body 1 provided with the inlet 131 is provided with a venting channel extending in a length direction of the side wall, two ends of the venting channel are closed, and the inlet 131 is in communication with the inside of the venting channel, and the outlet 131 is in communication with the outside of the venting channel. By providing the venting channel, the resistance encountered by the gas when passing through the inlet 131 can be reduced, so that the gas can pass through the inlet 131 more quickly, thereby improving the gas discharging speed.

In one embodiment, the inlet 131 may be an elongated hole extending in the length direction of the venting channel to increase the gas flow through the inlet 131, thereby improving the gas discharging efficiency.

As shown in FIG. 2, the box body 1 includes a bottom plate 11 and multiple side plates. The multiple side plates are arranged around the circumferential direction of the bottom plate 11 and connected to the bottom plate 11, and the area surrounded by the multiple side plates is used to form the mounting cavity 10. The side plate of at least one side is provided with the inlet 131 and the outlet.

In this embodiment, the bottom plate 11 is roughly rectangular, and the side plates are arranged on the front, rear, left and right sides of the bottom plate 11. For the convenience of introduction, the side plates located on the front, rear, left and right sides of the bottom plate 11 are referred to as the front side plate 15, the rear side plate 14, the left side plate 12 and the right side plate 13 respectively.

In this embodiment, a venting channel is provided in each of the left side plate 12 and the right side plate 13, the venting channel extends in a front-rear direction, and front and rear ends of the venting channel are both blocked. The inner sides of the left side plate 12 and the right side plate 13 are each provided with the inlets 131 to be in communication with the pressure relief cavity 20; the outer sides of the left side plate 12 and the right side plate 13 are each provided with an outlet to be in communication with the outside of the box body 1.

In one embodiment, multiple mounting cavities 10 are arranged in the box body 1, and each mounting cavity 10 is provided with a tray 2 and a pressure relief cavity 20, and each pressure relief cavity 20 is in communication with the corresponding inlet 131. By setting multiple mounting cavities 10, the multiple batteries in the power battery can be divided into multiple cell modules, the number of cells 3 on the tray 2 in each cell module can be reduced, and the bearing capacity requirements of each tray 2 can be reduced, which is conducive to improving the stability of the power battery structure. Each mounting cavity 10 and the tray 2 are formed with a pressure relief cavity 20, and each pressure relief cavity 20 is in communication with the inlet 131 in the corresponding mounting cavity 10, which can ensure that the gas generated by the cell 3 in each battery module during thermal runaway can quickly pass through the inlet 131 and be discharged from the outlet.

For example, the box body 1 further includes multiple support beams. The multiple support beams are cross-arranged on the bottom plate 11. The multiple support beams, together with the side plates, enclose to form multiple mounting cavities 10. At least one of the side plates which enclose to form the same mounting cavity 10 is provided with an inlet 131 and an outlet. At least one side plate is provided therein with the venting channel, so that the venting channels are located at the periphery of the multiple mounting cavities 10, which facilitates the communication between the multiple mounting cavities 10 and the venting channels, and is also conducive to the gas in the venting channels being discharged out of the box body 1.

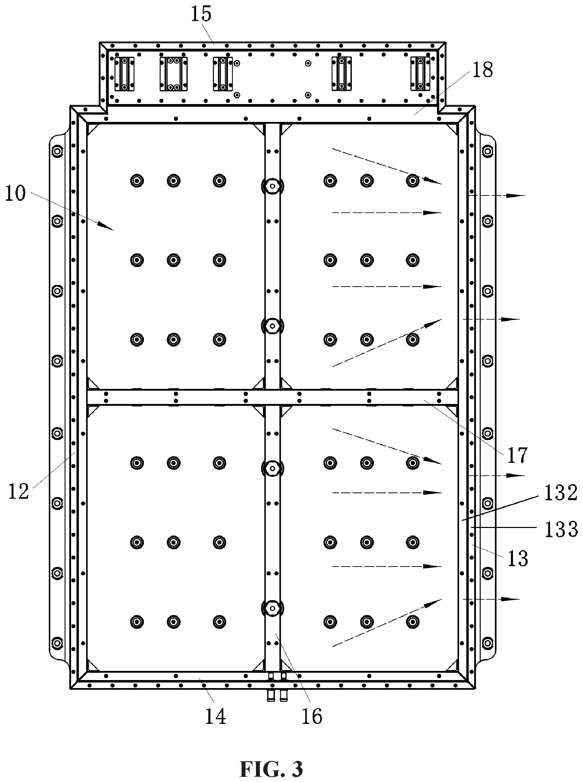

In this embodiment, the space surrounded by the side plates is divided into four mounting cavities 10 by multiple support beams, and a cell module is arranged in each mounting cavity 10. As shown in FIG. 2 and FIG. 3, the multiple support beams include a longitudinal beam 16, a first cross beam 17, and a second cross beam 18. The longitudinal beam 16 extends in the front-rear direction, and a rear end of the longitudinal beam 16 is connected to the rear side plate 14; and the first cross beam 17 and the second cross beam 18 both extend in a left-right direction. Two ends of the first cross beam 17 are connected to the left side plate 12 and the right side plate 13 respectively, and the first cross beam 17 and the longitudinal beam 16 are arranged in a cross. Two ends of the second cross beam 18 are connected to the left side plate 12 and the right side plate 13 respectively, the second cross beam 18 is located in front of the first cross beam 17, and a middle part of the second cross beam 18 is connected to a front end of the longitudinal beam 16. The longitudinal beam 16, the first cross beam 17, and the second cross beam 18 are in the shape of a Chinese character " 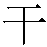 ", and enclose together with the left side plate 12, the right side plate 13, and the rear side plate 14 to form four mounting cavities 10.

As shown in FIG. 3, the inner side walls of the left side plate 12 and the right side plate 13 constitute part of the inner walls of the two mounting cavities 10, and the inner side walls of the left side plate 12 and the right side plate 13 are each provided with the inlet 131 corresponding to the respective mounting cavity 10, and correspondingly, the outer side walls of the left side plate 12 and the right side plate 13 are each provided with the outlet corresponding to the respective mounting cavity 10. The flow paths of the gas in the pressure relief cavities 20 are shown by the dotted arrow in FIG. 3, and the gas enters the venting channel from the inlet in the inner side of the right side plate 13 (left side plate 12), and is then directly discharged through the outlet of the right side plate 13 (left side plate 12). It is to be noted here that FIG. 3 only shows the flow paths of the gas in the right side area of the longitudinal beam 16, and the flow paths of the gas in the left side area of the longitudinal beam 16 is the same as those on the right side, which will not be repeated here.

In this embodiment, the space in the box body 1 is divided by the longitudinal beam 16 into two areas arranged left and right, and there are two mounting cavities 10 in each area. Correspondingly, the inlets 131 and outlets are provided on the left and right sides of the longitudinal beam 16, which can shorten the gas discharging paths of the gas generated due to thermal runaway, and is conducive to avoiding a sharp increase in the air pressure and temperature in the pressure relief cavities 20.

In one embodiment, at least part of the longitudinal beam 16 is arranged to be spaced apart from the bottom plate 11, and at least part of the first cross beam 17 is arranged to be spaced apart from the bottom plate 11. The multiple mounting cavities 10 are in communication with each other, and after the inlet 131 or outlet corresponding to a certain mounting cavity 10 is blocked, the gas in this mounting cavity 10 can be discharged through other mounting cavities 10, thereby improving the safety of the power battery.

In one embodiment, a venting valve 4 is provided at the outlet, and the venting valve 4 can be opened when the gas pressure in the venting channel reaches a preset value to allow the venting channel to be in communication with the outside of the box body 1.

In this embodiment, each gas discharge channel is provided with four outlets, and the venting valve 4 is provided at each outlet. In other embodiments, the numbers of outlets and venting valves on each gas discharge channel can be set according to practical requirements.

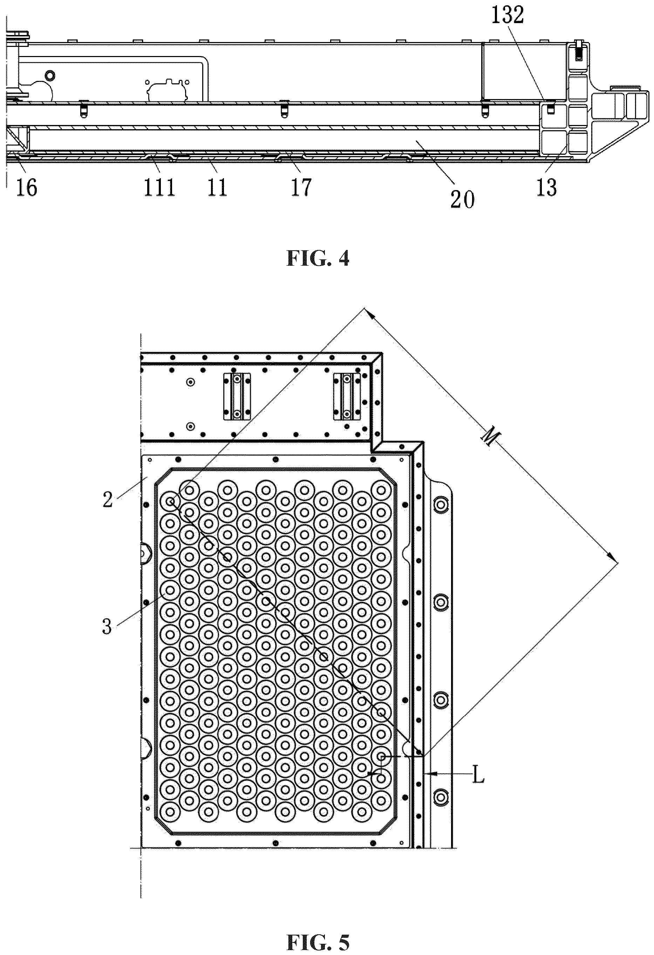

As shown in FIG. 4, the bottom plate 11 is provided with multiple convex bumps 111 arranged at intervals at positions corresponding to the first cross beam 17 and the longitudinal beam 16, and the convex bumps 111 are arranged protruding into the box body 1. The first cross beam 17 can abut against the convex bumps 111 at the corresponding positions, so that the portion of the bottom plate 11 between two adjacent convex bumps 111 is arranged to be spaced apart from the first cross beam 17 to allow the two mounting cavities 10 arranged on the front and rear sides to be in communication with each other. The longitudinal beam 16 can abut against the convex bumps 111 at the corresponding positions, so that a portion of the bottom plate 11 between two adjacent convex bumps 111 is arranged to be spaced apart from the longitudinal beam 16 to allow the two mounting cavities 10 arranged on the left and right sides to be in communication with each other.

In addition, the convex bumps 111 can also play a role in supporting the first cross beam 17 and the longitudinal beam 16 and improving the stability of the first cross beam 17 and the longitudinal beam 16, and can increase the strength of the bottom plate 11 and improve the bearing capacity of the box body 1.

In one embodiment, the longitudinal beam 16, the first cross beam 17 and the second cross beam 18 can all be hollow structures to reduce weight, reduce the force on the bottom plate 11 and improve the reliability of the power battery.

In one embodiment, the front side plate 15 and the rear side plate 14 of the box body 1 can also be hollow structures to reduce the weight of the box body 1.

In one embodiment, the left side plate 12, the right side plate 13 and the rear side plate 14 are all step structures. As shown in FIG. 3, taking the right side plate 13 as an example, the right side plate 13 includes a first top surface 133 and a second top surface 132 of different heights. The first top surface 133 is located outward of the second top surface 132 and is higher than the second top surface 132. The second top surface 132 is flush with the top surface of the support beam. The second top surface 132 and the top surface of the support beam form an annular installing surface. The annular installing surface is arranged circumferentially around the tray 2 and is configured to support a bottom edge of the tray 2. By setting the installing surface, the fixing effect of the tray 2 can be improved, and it can be ensured that the tray 2 is arranged to be spaced apart from the bottom plate 11, thereby forming the pressure relief cavities 20.

In one embodiment, reinforcing ribs can be provided in the side plates and the support beams, and the reinforcing ribs can improve the strength of the side plates and the support beams to better support and fix the tray 2.

As shown in FIG. 5, in one embodiment, the cell 3 close to the inlet 131 of the venting channel is a proximal cell, and the gas discharging path of the proximal cell when thermal runaway occurs is the shortest, and the gas discharging path is L. The cell 3 far from the inlet 131 of the venting channel is a distal cell, and the gas discharging path of the distal cell when thermal runaway occurs is the longest, which is M.

For example, if 180 cylindrical cells 3 are installed in the box body 1, L is 102mm, M is 800mm, then the shortest gas discharging path of the cell 3 is 102mm, and the longest gas discharging path is 800mm, which can greatly alleviate the pressure in the box body 1 that increases sharply when thermal runaway of the cell 3 occurs.

## Claims

1. A power battery, comprising:
a box body (1), wherein a mounting cavity (10) is disposed in the box body (1); and
a tray (2), wherein the tray (2) is used for installing a plurality of cells (3), the tray (2) is disposed in the mounting cavity (10), a bottom surface of the tray (2) and the mounting cavity (10) enclose to form a pressure relief cavity (20), and the tray (2) is provided with a through hole (21) in communication with the pressure relief cavity (20);
wherein the mounting cavity (10) is enclosed with side walls of the box body (1), an inner side of at least one side wall of the side walls of the box body (1) is provided with an inlet (131) in communication with the pressure relief cavity (20), an outer side of the at least one side wall of the side walls of the box body (1) is provided with an outlet in communication with external environment of the box body (1), and the inlet (131) is in communication with the outlet.

2. The power battery according to claim 1, wherein the inlet (131) and the outlet on a same side wall are arranged opposite to each other.

3. The power battery according to claim 1, wherein a venting channel is disposed in a side wall of the box body (1) provided with the inlet (131) and extends in a length direction of the side wall, two ends of the venting channel are closed, and the inlet (131) is in communication with the outlet via the venting channel.

4. The power battery according to claim 3, wherein the inlet (131) is an elongated hole extending in a length direction of the venting channel.

5. The power battery according to any one of claims 1 to 4, wherein the box body (1) comprises:
a bottom plate (11); and
a plurality of side plates, arranged around a circumferential direction of the bottom plate (11) and connected to the bottom plate (11), wherein at least one of the plurality of side plates is provided with the inlet (131) and the outlet.

6. The power battery according to claim 5, wherein each of two side plates arranged on left and right is provided with the inlet (131) and the outlet.

7. The power battery according to claim 1, wherein a plurality of mounting cavities (10) are disposed in the box body (1), each of the mounting cavities (10) is provided with the tray (2) and the pressure relief cavity (20), and each of the pressure relief cavities (20) is in communication with a respective inlet (131).

8. The power battery according to claim 5, wherein a plurality of mounting cavities (10) are disposed in the box body (1), each of the mounting cavities (10) is provided with the tray (2) and the pressure relief cavity (20), and each of the pressure relief cavities (20) is in communication with a respective inlet (131).

9. The power battery according to claim 8, wherein the box body (1) further comprises:
a plurality of support beams, cross-arranged on the bottom plate (11), and the plurality of support beams, together with the plurality of side plates, enclose to form a plurality of mounting cavities (10), wherein at least one of the side plates which are used for enclosing to form a same mounting cavity (10) is provided with the inlet (131) and the outlet.

10. The power battery according to claim 9, wherein the plurality of support beams comprise:
a longitudinal beam (16), extending in a front-rear direction, wherein a rear end of the longitudinal beam (16) is connected to a side plate at a rear side;
a first cross beam (17), extending in a left-right direction, wherein each of two ends of the first cross beam (17) is connected to a respective side plate, and the first cross beam (17) and the longitudinal beam (16) are arranged in a cross pattern; and
a second cross beam (18), extending in the left-right direction, wherein each of two ends of the second cross beam (18) is connected to a respective side plate, and a middle part of the second cross beam (18) is connected to a front end of the longitudinal beam (16).

11. The power battery according to claim 10, wherein at least part of the longitudinal beam (16) is configured to be spaced apart from the bottom plate (11), and at least part of the first cross beam (17) is configured to be spaced apart from the bottom plate (11).

12. The power battery according to any one of claims 1 to 4, wherein a venting valve (4) is configured at the outlet, and the venting valve (4) is configured to be opened when air pressure reaches a preset value.

13. An electric vehicle, comprising: the power battery according to any one of claims 1 to 12.

14. The electric vehicle according to claim 13, further comprising: the plurality of cells (3), wherein the plurality of cells (3) are disposed on the tray (2) of the power battery.
